# FASCICULE DE BREVET EUROPEEN

(11) **EP 3 271 243 B1**
(45) Date de publication et mention de la délivrance du brevet: **14.07.2021**
(21) Numéro de dépôt: 16714778.4
(22) Date de dépôt: 16.03.2016
(51) Int. Cl.: B64C 1/00, B64C 1/40, B64D 45/00, A62C 2/06, A62C 3/08, D04H 1/4209

(54) **PROCÉDÉ ET DISPOSITIF DE PROTECTION AU FEU D'UNE PIÈCE EN MATÉRIAU COMPOSITE**
VERFAHREN UND VORRICHTUNG ZUM FEUERFESTMACHEN EINES VERBUNDSTOFFTEILS
METHOD AND DEVICE FOR FIREPROOFING A COMPOSITE MATERIAL PART

(30) Priorité: 16.03.2015 FR 1552080
(43) Date de publication de la demande: 24.01.2018
(73) Titulaire: Daher Aerospace, 41100 Saint Julien De Chedon (FR)
(72) Inventeur: SOUBELET, Dominique, 37400 Amboise (FR); LANDAIS, Fabrice, 41140 St Romain sur Cher (FR)
(74) Mandataire: Ipside
(86) Numéro de dépôt international: PCT/EP2016/055742
(87) Numéro de publication internationale: WO 2016/146716

(56) Documents cités:
- FR-A1- 2 640 738
- FR-A1- 2 690 106
- US-A1- 2012 227 370

## Description

L'invention concerne un procédé et un dispositif pour la protection au feu d'une pièce en matériau composite. L'invention est plus particulièrement, mais non exclusivement, destinée au domaine de l'aéronautique pour la protection au feu d'une pièce de structure constituée d'un matériau composite à renfort fibreux dans une matrice polymère thermoplastique ou thermodurcissable.

La tenue au feu des pièces de structure aéronautiques situées dans des zones potentiellement exposées à la flamme est une obligation réglementaire. Les normes imposent une tenue minimale de 15 minutes de la pièce soumise à une flamme de 1100°C combinée à une vibration verticale de 0,4 mm d'amplitude à une fréquence de 50 Hz. La qualification de « tenue au feu » est définie par l'atteinte de différentes performances, lesquelles correspondent à des normes ou à des exigences internes de l'avionneur, par exemple :
- ne pas dépasser les températures critiques d'auto-inflammation de la structure lors de sa phase de dégazage ;
- la température sur la face de la structure opposée à la face soumise à la flamme, ne dépasse pas 500 °C après 5 minutes d'exposition, et 700 °C après 10 minutes d'exposition ;
- l'exposition à un flux énergétique de 120 kW.m⁻² ne doit pas perforer la structure au cours des 10 premières minutes d'exposition.

À cette fin, différentes techniques de protection sont utilisées. Le document EP 0167533 donne un aperçu des techniques de protection de l'art antérieur. Le document US 2012/0227370 A1 décrit un panneau pour la protection au feu en matériau composite pour le carter d'un turbomoteur. Le panneau est monté par boulonnage, clippage ou par l'intermédiaire de rivets. Le document FR 2 960 106 A1 décrit un feutre minéral aiguilleté comportant une couche de revêtement.

Ces différentes techniques de protection de l'art antérieur présentent les inconvénients d'un ajout de masse important, le poids spécifique des moyens de protection étant supérieur à celui de la pièce structurale, et de ne pas épouser la forme de la pièce. De plus, les revêtements utilisés pour protéger les pièces selon les méthodes de l'art antérieur, présentent l'inconvénient d'être sensibles à la perforation et à la déchirure, une telle dégradation dudit revêtement entraînant une perte d'efficacité de celui-ci vis-à-vis de la protection au feu. Afin de résoudre cet inconvénient, une solution de l'art antérieur consiste à protéger l'isolant thermique par des coquilles métalliques. En plus de l'ajout de masse conséquent engendré par cette solution, la coquille métallique tend à se déformer et à se dilater thermiquement de manière différente de celle de la structure, ce qui rend difficile sa fixation à ladite structure et engendre des contraintes mécaniques importantes dans la structure lorsque la coquille métallique est soumise à la flamme, ou même au cours des variations de température constatées en service. Couramment, des feuilles d'acier inoxydable d'une épaisseur de 0,08 mm sont utilisées à cette fin. La masse ajoutée par ces feuilles est de l'ordre de 1,270 kg.m⁻², alors que la faible épaisseur desdites feuilles ne confère qu'une protection mécanique modérée, sensible à la perforation, du revêtement de protection sous-jacent. Ainsi, lorsque le revêtement de protection sousjacent a une masse surfacique de l'ordre de 1 kg.m⁻² l'ajout de masse engendré par cette solution de protection de l'art antérieur est de l'ordre de 2,270 kg.m⁻².

L'invention vise à résoudre les inconvénients de l'art antérieur et concerne à cette fin un dispositif pour la protection au feu d'un tronçon d'une pièce de structure constituée d'un matériau composite, selon la revendication 1.

Ainsi la peau est apte à être formée par les techniques classiques de mise en œuvre des matériaux composites à matrice polymère, pour l'adapter précisément à la forme du tronçon de pièce à protéger. Elle protège l'isolant thermique, c'est-à-dire le feutre aiguilleté, des agressions mécaniques et l'ajout de masse reste modéré. La rigidité de ladite peau est suffisamment faible en regard de la rigidité de la structure pour lui permettre de suivre les déformations de ladite structure et sa dilatation thermique est du même ordre de grandeur que celle de la structure ainsi protégée.

L'invention est avantageusement mise en œuvre selon les modes de réalisation exposés ci-après, lesquels sont à considérer individuellement ou selon toute combinaison techniquement opérante.

Avantageusement, l'épaisseur de feutre minéral est de l'ordre de 10 mm. Cette épaisseur, combinée à la protection conférée par la peau composite, est suffisante pour assurer la protection thermique de la pièce de structure avec un ajout de masse modéré.

Selon un mode de réalisation, les moyens de fixation comprennent des rivets.

Selon un autre mode de réalisation, compatible avec le précédent, les moyens de fixation comprennent un collage entre la peau et la pièce de structure.

Avantageusement les moyens de fixation combinent un collage avec une colle résistant à une température supérieure ou égale à 200 °C et un rivetage. Ainsi, le collage assure une protection étanche de la pièce de structure aux températures de dégazage, puis les rivets assurent le maintien de la protection thermique sur la structure aux températures plus élevées.

Avantageusement, la peau comprend sur sa face interne, un pli constitué d'un tissu de verre. Ledit tissu de verre assure une protection du feutre vis-à-vis de la flamme.

L'invention concerne également un procédé pour la protection d'une pièce de structure selon la revendication 7.

Ainsi, mise en œuvre par drapage et cuisson-consolidation de la peau, permet d'adapter la forme de celle-ci à la pièce à protéger.

Avantageusement, l'étape iv) de fixation de la peau du procédé objet de l'invention comprend une opération de rivetage et le procédé comprend une étape consistant à :
vii. appliquer une protection thermique du type ablative ou intumescente sur les têtes de rivet.

Ainsi les têtes de rivet sont protégées de la température et les rivets ne transmettent pas la flamme à l'intérieur de la peau.

L'invention est exposée ci-après selon ses modes de réalisation préférés, nullement limitatifs, et en référence aux figures 1 à 2 dans lesquelles :
- la figure 1 montre schématiquement selon une vue de profil et en coupe selon AA définie figure 2, un exemple de réalisation du dispositif de protection objet de l'invention ;
- et la figure 2 illustre selon une vue en perspective, un exemple de réalisation de deux tronçons de protection thermique sur une pièce.

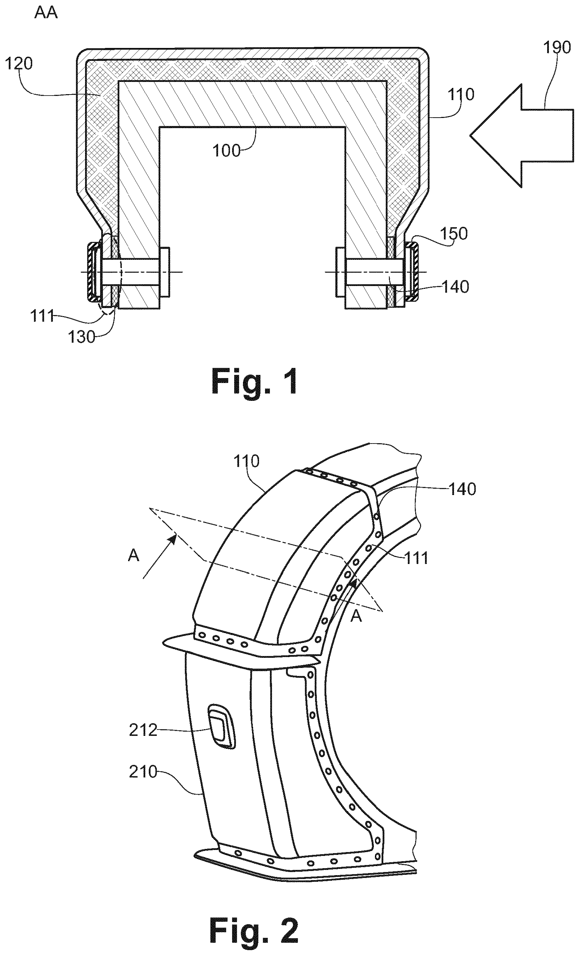

Figure 1, selon un exemple de réalisation, le dispositif de protection au feu objet de l'invention est adapté à la protection d'une pièce (100) structurale, notamment constituée d'un matériau composite stratifié à renfort fibreux dans une matrice polymère. Ledit dispositif comprend une peau (110) formant une coque enveloppante autour d'un tronçon de ladite pièce (100). Cette peau (110) est semi-rigide, et constituée, selon un exemple de réalisation, d'un matériau composite stratifié à renfort fibreux dans une matrice polymère thermodurcissable ou thermoplastique. À titre d'exemple non limitatif, ledit stratifié constituant la peau comporte deux plis d'un tissu de verre dans une résine époxy. Selon cet exemple de réalisation, la peau est constituée par drapage desdits deux plis sur un outillage, l'un des plis étant sec et l'autre pré-imprégné. La face externe de la peau est exposée à la flamme. Lors du drapage, le pli de verre sec est placé côté face interne. Puis la peau est de manière conventionnelle compactée et cuite. L'outillage de formage, de la peau reproduit la forme exacte du tronçon de la pièce (100) protégé, y compris les éventuels bossages (212) comme représenté figure 2.

Un isolant thermique (120) est interposé entre la face interne de la peau (110) et la pièce (100). Selon un exemple de réalisation, ledit isolant est constitué de fibres de quartz aiguilleté d'une épaisseur de 10 mm. Selon cette configuration la masse surfacique d'isolant thermique est de l'ordre de 1 kg.m⁻².

Selon un exemple de réalisation, la peau est liée à la pièce par collage, au moyen d'une colle (130) silicone résistant à une température d'au moins 200 °C et au moyen de rivets (140). À cette fin la peau (110) comprend des portions (111) de fixation, prévues dans l'outillage de drapage. La souplesse de la peau lui permet de s'adapter à la forme de la pièce et d'assurer un bon contact entre ladite pièce et les portions d'assemblage (111) de sorte que le volume enserré par la peau est étanche. Les têtes de rivet sont protégées par un revêtement (150) de protection thermique de type ablatif ou intumescent, par exemple un revêtement ablatif distribué sous la marque Fastblock ® 800 par la société Esterline. L'association d'un collage et d'un rivetage permet d'arrimer la peau au plus près du contour de la pièce y compris dans les zones de rayon de raccordement où il n'est pas possible d'installer des rivets. Selon cet exemple de réalisation, la masse globale ajoutée est de 1,7 kg.m⁻² soit un gain de 25 % par rapport à la solution de l'art antérieur utilisant des feuilles de protection métalliques.

Figure 2, la surface de la pièce (100) susceptible d'être exposée aux flammes est recouverte, par tronçons, par une pluralité de dispositifs (110, 210) selon l'invention. La pièce ainsi couverte est soumise à une flamme de 1100 °C et correspondant à un flux énergétique de 120.10³ W.m⁻², pendant 15 minutes ainsi qu'à une vibration à déplacement imposé d'amplitude 0,4 mm à une fréquence de 50 Hz :
- la protection thermique n'est pas perforée ;
- la température de la pièce reste inférieure à 500 °C après 5 minutes d'exposition et inférieur à 700 °C après 10 minutes d'exposition ;
- et surtout, s'agissant d'une pièce (100) constituée d'un composite à renfort de fibres de carbone dans une matrice phénolique, la température d'auto-inflammation n'est pas atteinte pendant la phase de dégazage de la matrice.

Aussi le dispositif objet de l'invention procure une protection thermique compatible avec les normes aéronautiques en vigueur, avec un ajout de masse inférieur de 25 % aux solutions connues de l'art antérieur.

Le dispositif et le procédé objet de l'invention sont plus particulièrement avantageux pour la réalisation de la protection thermique d'une pièce de structure constituée d'un matériau composite à matrice polymère. Toutefois, le dispositif et le procédé objets de l'invention sont également adapté à la réalisation de la protection thermique d'une pièce de structure constituée d'un autre matériau.

## Revendications

1. Dispositif pour la protection au feu d'un tronçon d'une pièce (100) de structure constituée d'un matériau composite, comportant:
a. une peau (110, 210) apte à former une coque enveloppant sur le tronçon de la pièce (100), mais décalée de la surface de celui-ci d'une épaisseur d'un isolant, comportant une face externe destinée à être tournée vers la flamme et une face interne, laquelle peau est constituée d'un matériau composite comportant un renfort fibreux dans une matrice polymère et comportant des moyens (111) de fixation à la pièce de structure ;
b. une couche de feutre (120) minéral aiguilleté pour être placée sur la face interne de la peau, de manière à être interposée entre la face interne de la peau et la surface du tronçon de la pièce (100) de structure, et constituant l'isolant.

2. Dispositif selon la revendication 1, dans lequel l'épaisseur de feutre minéral (120) est de l'ordre de 10 mm

3. Dispositif selon la revendication 1, dans lequel les moyens de fixation comprennent des rivets (140).

4. Dispositif selon la revendication 1, dans lequel les moyens de fixation comprennent un collage (130) entre la peau et la pièce de structure.

5. Dispositif selon la revendication 1, dans lequel les moyens de fixation combinent un collage (130), avec une colle résistant à une température supérieure ou égale à 200 °C, et un rivetage.

6. Dispositif selon la revendication 1, dans lequel la peau (110, 210) comprend sur sa face interne un pli constitué d'un tissu de verre.

7. Procédé pour la protection d'une pièce de structure mettant en oeuvre un dispositif selon la revendication 6, comportant les étapes consistant à :
i. draper un pli de verre de verre non imprégné sur un outillage correspondant à la forme du tronçon de la pièce (100) de structure mais décalée de l'épaisseur de la couche de feutre (120) minéral aiguilleté, ledit pli de verre sec se trouvant côté face interne de la peau ;
ii. draper un pli de verre préimprégné sur le pli de verre non imprégné ;
iii. cuire le stratifié ainsi obtenu de sorte à former la peau (110, 210);
iv. placer la couche de feutre (120) minéral aiguilleté sur la face interne de ladite peau ;
v. fixer la peau sur le tronçon correspondant de la pièce de structure ;
vi. répéter les opérations i) à v) pour chaque tronçon de la pièce de structure jusqu'à couvrir ladite pièce de structure.

8. Procédé selon la revendication 7, dans lequel l'étape v) de fixation de la peau comprend une opération rivetage et qui comprend une étape consistant à :
vii. appliquer une protection thermique (150) du type ablative ou intumescente sur les têtes de rivet (140).

## Patentansprüche

1. Vorrichtung zum Feuerfestmachen eines Abschnitts eines Strukturteils (100), das aus einem Verbundmaterial besteht, aufweisend:
a. eine Haut (110, 210), die imstande ist, auf dem Abschnitt des Teils (100), aber von der Oberfläche desselben um eine Dicke einer Isolierung versetzt, eine ummantelnde Schale zu bilden, aufweisend eine Außenfläche, die bestimmt ist, in Richtung der Flamme zu zeigen, und eine Innenfläche, wobei die Haut aus einem Verbundmaterial besteht, das eine Faserverstärkung in einer Polymermatrix aufweist und Befestigungsmittel (111) am Strukturteil aufweist;
b. eine Mineral-Nadelfilzschicht (120), um auf der Innenfläche der Haut derart platziert zu sein, dass sie zwischen der Innenfläche der Haut und der Oberfläche des Abschnitts des Strukturteils (100) angebracht ist und die Isolierung bildet.

2. Vorrichtung nach Anspruch 1, wobei die Dicke des Mineral-Filzes (120) zirka 10 mm beträgt.

3. Vorrichtung nach Anspruch 1, wobei die Befestigungsmittel Niete (140) umfassen.

4. Vorrichtung nach Anspruch 1, wobei die Befestigungsmittel eine Klebung (130) zwischen der Haut und dem Strukturteil umfassen.

5. Vorrichtung nach Anspruch 1, wobei die Befestigungsmittel eine Klebung (130) mit einem Kleber mit einer Temperaturbeständigkeit von über oder gleich 200 °C und eine Nietung kombinieren.

6. Vorrichtung nach Anspruch 1, wobei die Haut (110, 210) auf ihrer Innenfläche eine Lage umfasst, die aus einem Glasgewebe besteht.

7. Verfahren zum Feuerfestmachen eines Strukturteils, bei dem eine Vorrichtung nach Anspruch 6 verwendet wird, aufweisend die Schritte, die darin bestehen:
i. Drapieren einer nicht imprägnierten Glaslage auf einem Werkzeug, das der Form des Abschnitts des Strukturteils (100) entspricht, aber um die Dicke der isolierenden Mineral-Nadelfilzschicht (120) versetzt ist, wobei sich die trockene Glaslage auf der Seite der Innenfläche der Haut befindet;
ii. Drapieren einer vorimprägnierten Glaslage auf der nicht imprägnierten Glaslage;
iii. Brennen des derart erhaltenen Schichtmaterials derart, dass die Haut (110, 210) gebildet wird;
iv. Platzieren der Mineral-Nadelfilzschicht (120) auf der Innenfläche der Haut;
v. Befestigen der Haut auf dem entsprechenden Abschnitt des Strukturteils;
vi. Wiederholen der Operationen i) bis v) für jeden Abschnitt des Strukturteils, bis das Strukturteil bedeckt ist.

8. Verfahren nach Anspruch 7, wobei der Befestigungsschritt v) der Haut einen Nietvorgang umfasst und der einen Schritt umfasst, der darin besteht:
vii. Anbringen eines Wärmeschutzes (150) vom Typ ablativ oder intumeszierend auf den Nietenköpfen (140).

## Claims

1. Device for fireproofing a section of a structural part (100) consisting of a composite material, including:
a. a skin (110, 210) able to form an enveloping shell on the section of the part (100), but offset from the surface thereof by a thickness of an insulator, including an outer face intended to be turned towards the flame and an inner face, which skin consists of a composite material including a fibrous reinforcement in a polymer matrix and including means (111) for attaching to the structural part;
b. a layer of needled mineral felt (120) to be placed on the inner face of the skin, so as to be interposed between the inner face of the skin and the surface of the section of the structural part (100), and constituting the insulator.

2. Device according to claim 1, wherein the thickness of mineral felt (120) is in the order of 10 mm.

3. Device according to claim 1, wherein the attachment means comprise rivets (140).

4. Device according to claim 1, wherein the attachment means comprise an adhesive bonding (130) between the skin and the structural part.

5. Device according to claim 1, wherein the attachment means combine an adhesive bonding (130), with a glue resistant to a temperature greater than or equal to 200°C, and a riveting.

6. Device according to claim 1, wherein the skin (110, 210) comprises, on the inner face thereof, a ply consisting of a glass fabric.

7. Method for protecting a structure part using a device according to claim 6, including the steps of:
i. draping a glass ply of non-impregnated glass on a tool corresponding to the shape of the section of the structure part (100) but offset by the thickness of the layer of needled mineral felt (120), said dry glass ply being located on the same side as the inner face of the skin;
ii. draping a preimpregnated glass ply on the non-impregnated glass ply;
iii. curing the laminate thus obtained so as to form the skin (110, 210);
iv. placing the layer of needled mineral felt (120) on the inner face of said skin;
v. attaching the skin to the corresponding section of the structural part;
vi. repeating operations i) to v) for each section of the structure part until said structural part is covered.

8. Method according to claim 7, wherein the step v) of attaching the skin comprises a riveting operation and which comprises a step of:
vii. applying a thermal protection (150) of the ablative or intumescent type on the rivet heads (140).
